# FASCICULE DE BREVET EUROPEEN

(11) **EP 1 023 233 B1**
(45) Date de publication et mention de la délivrance du brevet: **23.07.2003**
(21) Numéro de dépôt: 98947640.3
(22) Date de dépôt: 09.10.1998
(51) Int. Cl.: B65G 39/04, B65G 39/14, B65G 39/09

(54) **DISPOSITIF INTEGRE DE LIAISON ENTRE ROULEAUX ELEMENTAIRES CONSECUTIFS DE SUPPORT CURVILIGNE POUR BANDE TRANSPORTEUSE SOUPLE SANS FIN D'UN CONVOYEUR**
INTEGRIERTE VERBINDUNGSVORRICHTUNG ZWISCHEN AUFEINANDERFOLGENDEN EINZELROLLEN ZUM KURVENFÖRMIGEN STÜTZEN EINES FLEXIBLEN ENDLOSEN FÖRDERBANDES EINES FÖRDERERS
INTEGRATED DEVICE LINKING CONSECUTIVE ELEMENTARY ROLLERS PROVIDING CURVILINEAR SUPPORT TO FLEXIBLE ENDLESS CONVEYOR BELT

(30) Priorité: 14.10.1997 FR 9713008
(43) Date de publication de la demande: 02.08.2000
(73) Titulaire: David S.A., 42026 Saint Etienne Cedex (FR)
(72) Inventeur: VALCADA, Florent, F-95000 Vaureal (FR)
(74) Mandataire: Dupuis, François
(86) Numéro de dépôt international: FR9802164
(87) Numéro de publication internationale: WO99019240

(56) Documents cités:
- EP-A- 0 483 475
- DE-B- 1 079 546
- FR-A- 1 588 809
- US-A- 3 124 238

## Description

L'invention se rapporte au domaine technique de la manutention en continu de matériaux en vrac par des convoyeurs équipés de bandes transporteuses souples sans fin. Plus particulièrement, l'invention concerne les supports curvilignes desdites bandes transporteuses souples constitués de rouleaux élémentaires juxtaposés et, plus spécifiquement encore, l'invention est relative aux liaisons entre lesdits rouleaux élémentaires de ces supports curvilignes.

Essentiellement, on connaît, à ce jour des supports curvilignes pour bandes transporteuses souples constitués de rouleaux élémentaires juxtaposés comportant des roulements à billes intégrés autorisant leur rotation. La liaison entre deux rouleaux élémentaires consécutifs est assurée par un axe métallique articulé ou par un maillon, également métallique. Le support curviligne, ainsi formé par la succession des rouleaux élémentaires consécutifs est suspendu, par ses extrémités, à l'infrastructure du convoyeur par l'intermédiaire de crochets. Ces supports curvilignes faits de rouleaux élémentaires à roulements à billes, bien que très répandus, présentent plusieurs inconvénients majeurs. Outre leur complexité et leur poids - chacun des rouleaux élémentaires comportant deux ensembles de roulements à billes - ; ils présentent une grande fragilité puisque lesdits rouleaux élémentaires travaillent en atmosphère plus ou moins poussiéreuse en fonction de la nature des matériaux transportés, ce qui nécessite une surveillance constante pour éviter l'encrassement des roulements à billes et l'usure et assurer la maintenance de l'installation, fragilité à laquelle s'ajoute celle des liaisons entre rouleaux élémentaires, généralement composées d'axes métalliques articulés ou de maillons métalliques constituant autant de pièces d'usure.

Pour pallier ces inconvénients et, en particulier pour réduire les coûts élevés de maintenance, le brevet US 4.917.232, de Joy Manufacturing Co, propose un support de bande transporteuse souple sans fin, en forme de guirlande, également constitué de rouleaux élémentaires mais dans lequel la fonction de rotation est reportée sur les extrémités dudit support reliées à l'infrastructure du convoyeur. Dans ce dispositif, en effet, les rouleaux élémentaires, de conception, beaucoup plus simple, sont montés solidaires d'un câble métallique unique qui fait office de liaison entre les rouleaux élémentaires et assure la rotation de l'ensemble grâce au montage de ses extrémités dans deux boîtiers à roulements à billes fixés sur l'infrastructure du convoyeur.

Cette solution présente effectivement, l'avantage de réduire à deux par support le nombre des roulements à billes nécessaires mais en accroissant, bien évidemment, leur taille et d'éliminer les pièces d'usure entre rouleaux élémentaires utilisées dans les installation précédemment décrites. Elle ne résout, cependant pas la totalité des problèmes de maintenance, en raison des risques de corrosion du câble métallique unique et de la fragilité des boîtiers à roulement à billes d'extrémité ou subsistent des risques de pollution par la poussière et sur lesquels est reportée toute la fonction de rotation ainsi que la totalité de la charge.

D'autres solutions ont été proposées pour réduire les problèmes d'usure, telles que celles décrites dans les documents DE 10 79 546 B, de KLOCKNER WERKE, FR 1 588 809 A, DE DUHAMEL, et US 3 124 238 A, de TYLER. Il est, cependant, à remarquer que lesdites solutions nécessitent une conception particulière, assez complexe, des rouleaux supports, conception qui tend à accroître la masse des rouleaux et, par conséquent, la consommation d'énergie. De plus, le document DE 10 79 546 B décrit un dispositif de rouleau dont tout ou partie du corps est composé d'élastomère, avec une liaison entre rouleaux rigides. Ce dispositif ne peut donner satisfaction, en ce qui concerne les problèmes de maintenance, puisque l'élastomère est utilisé en extension, ce qui ne peut que réduire sa durée de vie.

Le but de la présente invention est donc de proposer un dispositif de support curviligne à rouleaux élémentaires pour bande transporteuse souple sans fin, économique par sa conception et sa réalisation, qui utilise des rouleaux standards aux dimensions normalisées, sans modification de leur structure, adaptable aisément aux caractéristiques de l'installation, versatile, c'est à dire facilement modifiable en cas de changement de site d'exploitation et permettant de réduire la maintenance par suppression de tout mouvement relatif de rotation entre les pièces en rotation, en éliminant les pièces d'usure tels que les axes articulés ou les maillons métalliques ainsi que les éléments fragiles, tels que roulements à billes ou le câble métallique.

Pour ce faire, l'invention est constituée d'un dispositif intégré de liaison entre rouleaux élémentaires consécutifs de support curviligne pour bande transporteuse souple sans fin d'un convoyeur ou entre rouleaux élémentaires d'extrémités et infrastructure dudit convoyeur, destiné à être monté, par couple, dans les orifices centraux pratiqués dans les deux parois planes axialement opposées de chacun des rouleaux élémentaires, qui sont des rouleaux standards. On entend par rouleaux standards, des rouleaux disponibles dans le commerce, aux dimensions normalisées, dont la forme ou la structure ne sont pas modifiées pour y inclure le dispositif intégré de liaison, objet de l'invention.

Le dispositif intégré de liaison entre deux rouleaux élémentaires standards consécutifs de support curviligne pour bande transporteuse souple sans fin d'un convoyeur ou entre rouleaux élémentaires standards d'extrémités et infrastructure dudit convoyeur, destiné à être monté par couple dans les orifices centraux pratiqués dans les deux parois planes axialement opposées de chacun desdits rouleaux élémentaires standards, est remarquable en qu'il comprend une articulation flexible monobloc montée dans un des orifices pratiqués dans les parois centrales des rouleaux, ladite articulation flexible disposée à l'une des extrémités d'un rouleau élémentaire étant relié à l'articulation adjacente disposée sur le rouleau annexe par un élément de liaison rigide , et en ce que la liaison entre lesdites articulations flexibles et l'élément de liaison rigide autorise non seulement la rotation desdits rouleaux élémentaires standards mais également la formation d'un angle (α) entre deux rouleaux élémentaires standards consécutifs pour former un support curviligne en forme de guirlande, sans qu'existe, entre les éléments de rotation, de mouvement relatif de rotation.

.L'articulation flexible monobloc, qui constitue l'élément essentiel du dispositif intégré de liaison entre rouleaux élémentaires standards est constituée d'une tête d'appui à face externe convexe et d'une zone terminale en forme de tronc de cône, forme destinée à faciliter le montage de ladite articulation flexible monobloc dans l'orifice central de la paroi plane du rouleau élémentaire standard prévu à cet effet. La tête d'appui et la zone terminale en forme de tronc de cône sont raccordées par une gorge d'encastrement destinée à assurer la mise en place de l'articulation flexible monobloc dans l'orifice central de la paroi plane du rouleau élémentaire standard. L'articulation flexible monobloc est percée, le long de son axe de symétrie, d'un alésage central destiné à recevoir un axe métallique de liaison permettant, par des moyens appropriés tels que des boulons, de relier, entre elles, deux articulations flexibles monobloc montées sur deux rouleaux élémentaires standards consécutifs, un disque de maintien venant au contact, à l'intérieur de chacun des rouleaux élémentaires standards, de la face externe convexe de chacune des têtes d'appuis desdites articulations flexibles monobloc pour appliquer ladite tête d'appui contre la face interne de la paroi plane dudit rouleau élémentaire standard.

Dans une variante préférentielle, le dispositif intégré de liaison entre rouleaux élémentaires standards consécutifs de support curviligne pour bande transporteuse souple sans fin est caractérisé en ce que l'alésage central de l'articulation flexible monobloc est évasé en forme de tronc de cône, dans la tête d'appui pour favoriser la formation de l'angle nécessaire, entre deux rouleaux standards consécutifs, pour former le support curviligne de la bande transporteuse.

Dans une autre variante, le dispositif intégré de liaison entre rouleaux élémentaires standards consécutifs de support curviligne pour bande transporteuse souple sans fin est caractérisé en ce que la face interne de l'articulation flexible monobloc présente une inclinaison par rapport au plan orthogonal à l'axe de symétrie pour améliorer les appuis sur la face interne de la paroi plane du rouleau élémentaire.

Préférentiellement, l'articulation flexible monobloc est réalisée en matériau polymérique souple, tel qu'un élastomère, naturel ou de synthèse, présentant une dureté appropriée aux exigences de l'exploitation.

Une autre variante de l'invention consiste en ce que l'articulation flexible monobloc est revêtu d'un matériau lubrifiant polymérique soit sur la totalité de sa surface soit sur les seules parties de sa surface en contact avec les bords des orifices centraux et/ou avec les faces internes ou externes des parois planes des rouleaux élémentaires standards et/ou avec les faces en contact des disques de maintien.

Dans une autre variante de l'invention, la face du disque de maintien en contact avec la face externe convexe de la tête d'appui de l'articulation flexible monobloc est revêtues d'un matériau lubrifiant polymérique, préférentiellement de même nature que celui qui revêt la surface de l'articulation flexible monobloc.

Selon les cas, ledit matériau lubrifiant polymérique est un composé fluoré tel que du polytétrafluoréthylène ou une polyoléfine de haute ou très haute masse moléculaire, tel que du polyéthylène ou du polypropylène.

L'invention sera mieux comprise à la lecture de la description accompagnant les dessins, dans lesquels :
- la figure 1 montre une vue partielle de l'installation de manutention continue par convoyeur, en l'occurrence deux rouleaux élémentaires standards successifs présentant entre eux un angle pour constituer un support curviligne pour bande transporteuse sans fin ;
- la figure 2 détaille une variante préférentielle du dispositif intégré de liaison entre rouleaux élémentaires standards de support curviligne pour bande transporteuse souple sans fin, selon l'invention, en montrant l'ensemble des composants assemblés, indépendamment du rouleau élémentaire.

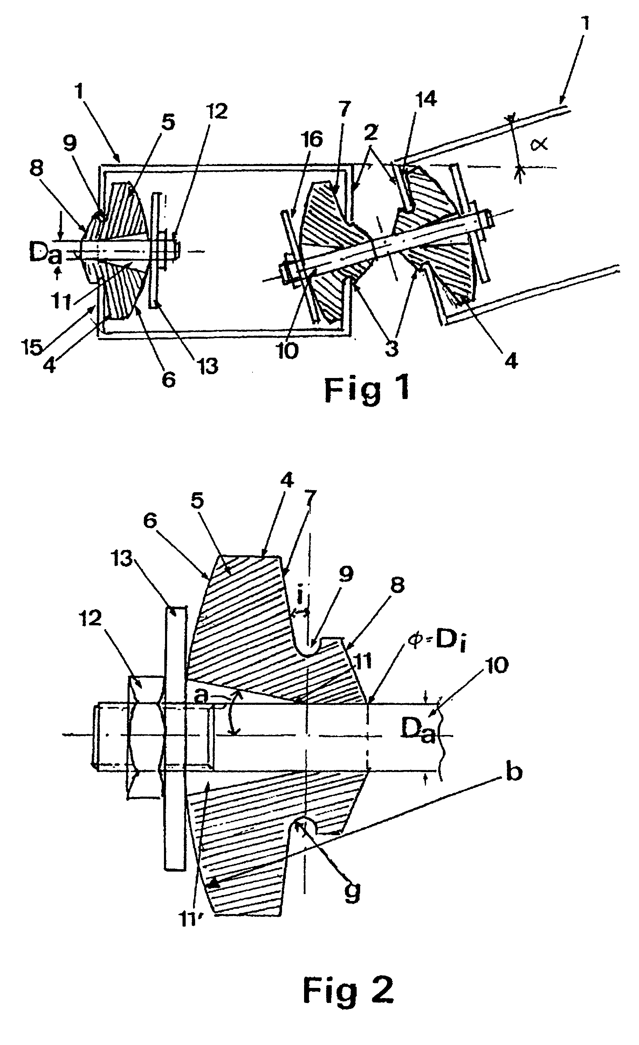

La figure 1 montre une vue partielle de l'installation de manutention continue par convoyeur. Deux rouleaux élémentaires standards successifs (1) présentent entre eux un angle (α) pour constituer un support curviligne pour bande transporteuse sans fin. Les rouleaux élémentaires standards (1) sont de forme cylindrique limitée par deux parois planes (2), axialement opposées, chacune percée d'un orifice central (3) dans lequel est montée une articulation flexible monobloc (4) pour assurer une liaison flexible avec le rouleau élémentaire standard voisin (1), en permettant la formation de l'angle (α), ladite articulation flexible monobloc (4) étant le composant essentiel du dispositif intégré de liaison entre rouleaux élémentaires standards consécutifs (1), objet de l'invention.

L'articulation flexible monobloc (4) est constituée d'une tête d'appui (5), comportant une face externe convexe (6) et une face interne d'appui (7), et d'une zone terminale (8) en forme de tronc de cône, forme destinée à faciliter le montage de l'articulation flexible monobloc dans l'orifice central (3) de la paroi plane (2) du rouleau élémentaire standard (1). La tête d'appui (5) et la zone terminale (8) sont reliées par une gorge d'encastrement (9) qui vient prendre place dans la paroi plane (2) du rouleau élémentaire standard (1) au niveau de l'orifice central (3).

De manière évidente, chacune des deux articulations flexibles monobloc (4) d'un rouleau élémentaire standard (1) est montée dans la paroi plane (2) de manière à ce que la tête d'appui (5) soit intérieure audit rouleau élémentaire standard (1) et, par conséquent, la zone terminale (8) se trouve être placée extérieurement audit rouleau élémentaire standard (1).

La liaison d'un rouleau élémentaire standard (1) au rouleau élémentaire standard voisin (1) est réalisée par l'intermédiaire d'un axe métallique de liaison (10), traversant l'articulation flexible monobloc (4) par un alésage central (11) ménagé à cet effet, dans l'axe de symétrie de ladite articulation flexible monobloc (4) à chacune des extrémités duquel, à l'intérieur du rouleau élémentaire standard (1), est fixé, par un moyen approprié tel qu'un boulon (12) un disque de maintien (13), venant au contact de la face externe convexe (6) de la tête d'appui (5) de l'articulation flexible monobloc (4) pour applique ladite tête d'appui (5) contre la face interne (14) de la paroi plane (2) du rouleau élémentaire standard (1).

Afin d'autoriser la formation de l'angle (α) entre deux rouleaux élémentaires standards consécutifs (1), la diamètre (Di) de l'alésage central (11) de l'articulation flexible monobloc (4) est légèrement supérieur au diamètre (Da) de l'axe métallique de liaison (10).

La caractéristique de ce dispositif intégré de liaison entre rouleaux élémentaires standards (1) selon l'invention réside en ce que l'articulation flexible monobloc (4) autorise à la fois la rotation desdits rouleaux élémentaires standards (1) et la formation de l'angle (α) pour réaliser la forme de guirlande du support curviligne pour bande transporteuse souple sans fin, sans qu'existe, entre les éléments en rotation, de mouvement relatif de rotation.

En fonctionnement, il n'y a donc aucun frottement, les éléments en rotation tournant ensemble, puisque l'articulation flexible monobloc (4) est intégrée au rouleau élémentaire standard (1). De même, les modifications de charge supportées par ladite articulation flexible monobloc (4), conjuguées au mouvement angulaire produit par la rotation provoquent, dans l'ensemble articulé, non pas un frottement entre le disque de maintien (13) et la tête d'appui (5) mais un phénomène de compression du bloc élastomérique constituant essentiel de l'articulation flexible monobloc. Or, il est bien connu que le travail en compression d'un bloc élastomérique est une garantie de sa longévité, contrairement au travail extension qui, lui, abrège sa durée de vie.

La figure 2 détaille une variante préférentielle du dispositif intégré de liaison entre rouleaux élémentaires standards de support curviligne pour bande transporteuse souple sans fin, selon l'invention, en montrant l'ensemble des composants assemblés, indépendamment du rouleau élémentaire standard.

Dans cette variante, l'alésage central (11) qui traverse ladite articulation flexible monobloc (4) dans son axe de symétrie reste cylindrique et de diamètre (Di) légèrement supérieur à celui de l'axe métallique de liaison (10) dans la zone terminale (8), mais prend une forme tronconique (11'), d'angle au sommet (a), dans la tête d'appui (5) pour accroître la facilité de la formation de l'angle (α) entre deux rouleaux élémentaires standards consécutifs (1).

La face externe convexe (6) de la tête d'appui (5) de l'articulation flexible monobloc (4) présente un rayon de courbure (b) alors que la face interne d'appui (7) présente un angle d'inclinaison (i) par rapport au plan orthogonal à l'axe de symétrie de ladite articulation flexible monobloc (4), la gorge d'encastrement ayant un rayon (g). Les dimensions de l'articulation flexible monobloc (4), l'angle au sommet (a) de la partie tronconique (11') de l'alésage central (11) comme l'angle d'inclinaison (i) de la face interne d'appui (7) de la tête d'appui (5) de l'articulation flexible monobloc (4) ainsi que le rayon de courbure (b) de la face externe convexe (6) de la tête d'appui (5) et le rayon (g) de la gorge d'encastrement sont calculés en fonction de l'angle (α) à obtenir entre deux rouleaux élémentaires standards (1) consécutifs, donc en fonction des caractéristiques de l'installation, telles que débit, vitesse, largeur de la bande et propriété du matériaux transporté.

Le disque de maintien (13) est, le plus souvent, métallique mais il peut être réalisé en tout autre matériau offrant des caractéristiques de résistance équivalentes.

L'articulation flexible monobloc (4) est réalisée dans un matériau polymère souple, préférentiellement un élastomère, naturel ou synthétique, dont la dureté est adaptée aux conditions de l'exploitation.

Afin d'améliorer les appuis entre la face externe convexe (6) de la tête d'appui (5) de l'articulation flexible monobloc (4), d'une part, et le disque de maintien (13), d'autre part et/ou entre la face interne d'appui (7) de la tête d'appui (5) de ladite articulation flexible monobloc (4) et la face interne (14) de la paroi plane (2) du rouleau élémentaire standard (1) et/ou entre la gorge d'encastrement (9) de ladite articulation flexible monobloc et les bords de l'orifice central (3) de la paroi plane (2) et/ou entre la base de la zone terminale (8) de ladite articulation flexible monobloc (4) et la face externe (15) de la paroi plane (2) du rouleau élémentaire standard (1), la surface d'articulation flexible monobloc (4) est, en totalité ou partiellement, -c'est-à-dire dans les seules parties venant en contact -, revêtue d'un matériau lubrifiant polymèrique.

De même, pour améliorer les appuis entre la face au contact (16) du disque de maintien (13) et la face externe convexe (6) de la tête d'appui (5) de l'articulation flexible monobloc (4), ladite face au contact (16) du disque de maintien (13) est dans une variante préférentielle, revêtue, également d'un matériau lubrifiant polymérique.

De préférence, les matériaux lubrifiants polymériques qui revêtent tout ou partie de la surface extérieure de l'articulation flexible monobloc (4) et la face au contact (16) du disque de maintien (13) sont de même nature chimique. Avantageusement, ledit matériau lubrifiant polymérique est un composé fluoré tel que du polytétrafluoréthylène ou une polyoléfine de haute ou très haute masse moléculaire tel que du polyéthylène ou du polypropylène.

Le dispositif intégré de liaison entre deux rouleaux élémentaires standards consécutifs de support curviligne pour bande transporteuse souple sans fin, objet de l'invention offre, par rapport aux solutions connues de l'art antérieur, de multiples avantages, parmi lesquels les principaux sont :
- l'utilisation de rouleaux standards du commerce, aux dimensions normalisées, l'articulation flexible monobloc venant s'insérer dans les parois latérales planes desdits supports, sans modifcation ;
- la réduction des coûts de maintenance par élimination d'une partie importante des sources d'usure, c'est-à-dire la suppression des rotations relatives entre pièces en rotation, l'amélioration des appuis, par utilisation de revêtements polymériques possédant des capacités de lubrifiants et le remplacement des pièces d'usure par des composants flexibles, ce qui se traduit, au niveau de l'entretien de l'installation par des arrêts de fonctionnement moins fréquents, donc moins de perte d'exploitation, et par moins de nécessité de rechange, donc moins de stocks de pièces ;
- la sécurité puisqu'en éliminant les mouvements de rotation relatifs des pièces en rotation, le dispositif intégré de liaison entre rouleaux élémentaires standards de support curviligne pour bande transporteuse souple sans fin supprime aussi les risques d'échauffement.
- l'aspect économique de la fabrication des articulation flexibles monobloc, simples pièces en élastomère, moulées aux dimensions optimales pour les caractéristiques de l'exploitation, donc parfaitement adaptées aux exigences de l'installation, ainsi que l'utilisation des rouleaux élémentaires standards qui ne nécessite, outre lesdites articulations flexibles monobloc que des éléments couramment disponibles, axes métalliques de liaison de diamètre adapté, boulons ou autres moyens appropriés de fixation et disques de maintien ;
- l'adaptabilité et la versatilité du dispositif puisque les dimensions de l'articulation flexible monobloc sont fonction du diamètre des rouleaux et des charges transportées et que les angles de l'alésage et de l'inclinaison de la face interne d'appui de la tête d'appui de l'articulation flexible monobloc tout comme le rayon de courbure de la face externe convexe de ladite tête d'appui et le rayon de la gorge d'encastrement sont calculés pour obtenir l'angle de liaison (α) entre deux rouleaux élémentaires standards consécutifs nécessaire pour former un support curviligne, en forme de guirlande, adapté aux exigences de l'installation ; la versatilité du dispositif est assurée par la seule nécessité de changer les articulations flexibles monobloc, les axes métallique de liaison et les disques de maintien, opération peu coûteuse et rapide, lorsque l'on change de site d'exploitation, l'ensemble du reste de l'installation pouvant demeurer inchangé si les conditions le permettent.

En résumé, il est bien évident que le dispositif intégré de liaison entre rouleaux élémentaires standards consécutifs de support curviligne pour bande transporteuse souple sans fin, selon l'invention, résout les problèmes d'usure nécessitant un coût élevé de maintenance fréquemment rencontrés dans les installations utilisant les dispositifs connus de l'art antérieur, et apporte les mêmes avantages économiques d'adaptabilité et de versatilité supplémentaires.

Il est bien évident que l'homme de l'art pourra combiner les différentes variantes du dispositif intégré de liaison entre rouleaux élémentaires standards de support curviligne pour bande transporteuse, objet de l'invention, ou utiliser des moyens équivalents sans sortir du cadre de l'invention.

## Revendications

1. Dispositif intégré de liaison entre deux rouleaux élémentaires standards (1) consécutifs de support curviligne pour bande transporteuse souple sans fin d'un convoyeur ou entre rouleaux élémentaires standards (1) d'extrémités et infrastructure dudit convoyeur, destiné à être monté par couple dans les orifices centraux (3) pratiqués dans les deux parois planes (2) axialement opposées de chacun desdits rouleaux élémentaires standards (1), **caractérisé en ce qu'**il comprend une articulation flexible monobloc (4) montée dans un des orifices (3) pratiqués dans les parois centrales des rouleaux, ladite articulation flexible disposée à l'une des extrémités d'un rouleau élémentaire étant relié à l'articulation adjacente disposée sur le rouleau annexe par un élément de liaison rigide (10), et **en ce que** la liaison entre lesdites articulations flexibles et l'élément de liaison rigide autorise non seulement la rotation desdits rouleaux élémentaires standards (1) mais également la formation d'un angle (α) entre deux rouleaux élémentaires standards (1) consécutifs pour former un support curviligne en forme de guirlande, sans qu'existe, entre les éléments de rotation, de mouvement relatif de rotation.

2. Dispositif intégré de liaison entre rouleaux élémentaires standards (1) consécutifs de support curviligne pour bande transporteuse souple sans fin selon la revendication 1, **caractérisé en ce que** l'articulation flexible monobloc (4) est constituée d'une tête d'appui (5) à face externe convexe (6) et d'une zone terminale (8) en forme de tronc de cône, forme destinée à faciliter le montage de ladite articulation flexible monobloc (4) dans l'orifice central (3) de la paroi plane (2) du rouleau élémentaire standard (1) prévu à cet effet, raccordées par une gorge d'encastrement (9), qu'elle est percée, le long de son axe de symétrie, d'un alésage central (11) destiné à recevoir l'élément de liaison rigide formé d'un axe métallique de liaison (10) permettant, par des moyens appropriés tels que des boulons (12), de relier, entre elles, deux articulations flexibles monobloc (4) montées sur deux rouleaux élémentaires standards (1) consécutifs, un disque de maintien (13) venant au contact, à l'intérieur de chacun des rouleaux élémentaires standards (1), de la face externe convexe (6) de chacune des têtes d'appui desdites articulations flexibles monobloc (4) pour appliquer ladite tête d'appui (5) contre la face interne (14) de la paroi plane (2) dudit rouleau élémentaire standard (1).

3. Dispositif intégré de liaison entre rouleaux élémentaires standards (1) consécutifs de support curviligne pour bande transporteuse souple sans fin selon l'une des revendications 1 ou 2, **caractérisé en ce que** l'alésage central (11) de l'articulation flexible monobloc (4) est évasé en forme de tronc de cône d'angle (α) au sommet (a) dans la tête d'appui (5) pour accroître la facilité de formation de l'angle (α) entre deux rouleaux élémentaires standards (1) consécutifs.

4. Dispositif intégré de liaison entre rouleaux élémentaires standards (1) consécutifs de support curviligne pour bande transporteuse souple sans fin selon l'une des revendications 1 à 3, **caractérisé en ce que** la face interne (7) de l'articulation flexible monobloc (4) présente une inclinaison d'angle (i) par rapport au plan orthogonal à l'axe de symétrie de ladite articulation flexible monobloc (4) pour améliorer les appuis sur la face interne (14) de la paroi plane (2) du rouleau élémentaire standard (1).

5. Dispositif intégré de liaison entre rouleaux élémentaires standards (1) consécutifs de support curviligne pour bande transporteuse souple sans fin selon l'une des revendications 1 à 4, **caractérisé en ce que** l'articulation flexible monobloc (4) est réalisée en matériau polymérique souple, tel qu'un élastomère naturel ou de synthèse présentant une dureté appropriée aux exigences de l'exploitation.

6. Dispositif intégré de liaison entre rouleaux élémentaires standards (1) de support curviligne pour bande transporteuse souple sans fin selon l'une des revendications 1 à 5, **caractérisé en ce que** l'articulation flexible monobloc (4) est revêtue d'un matériau lubrifiant polymérique.

7. Dispositif intégré de liaison entre rouleaux élémentaires standards (1) de support curviligne pour bande transporteuse souple sans fin selon la revendication 6, **caractérisé en ce que** l'articulation flexible monobloc (4) est revêtue, sur les seules parties de sa surface en contact avec les faces interne (14) ou externe (15) des parois planes (2) des rouleaux élémentaires standards (1) et/ou avec les faces en contact (16) des disques de maintien (13) dudit matériau lubrifiant polymérique.

8. Dispositif intégré de liaison entre rouleaux élémentaires standards (1) de support curviligne pour bande transporteuse souple sans fin selon la revendication 2, **caractérisé en ce que** la face (16) du disque de maintien (13) en contact avec la face externe convexe (6) de la tête d'appui (5) de ladite articulation flexible monobloc (4) est revêtu d'un matériau lubrifiant polymérique préférentiellement de même nature que celui qui revêt la surface de ladite articulation flexible monobloc (4)

9. Dispositif intégré de liaison entre rouleaux élémentaires standards (1) de support curviligne pour bande transporteuse souple sans fin selon l'une des revendications 6 à 8, **caractérisé en ce que** ledit matériau lubrifiant polymérique est un composé fluoré tel que du polytétrafluoréthylène.

10. Dispositif intégré de liaison entre rouleaux élémentaires standards (1) de support curviligne pour bande transporteuse souple sans fin selon l'une des revendications 6 à 8, **caractérisé en ce que** ledit matériau lubrifiant polymérique est une polyoléfine de haute ou de très haute masse moléculaire, tel que du polyéthylène ou du polypropylène.

## Patentansprüche

1. Integrierte Verbindungsvorrichtung zwischen zwei aufeinanderfolgenden Standard (1) - Einzelrollen zum kurvenförmigen Stützen eines flexiblen, endlosen Förderbandes eines Förderers oder zwischen Standard (1) - Einzelrollen an den Enden, und Traggerüst des genannten Förderers, die paarweise in den zentralen Öffnungen (3) der beiden ebenen Wände (2), die jeder der Standard-Einzelrollen (1) axial gegenüber angeordnet sind, montiert werden sollen, **dadurch gekennzeichnet, dass** sie eine elastische Einblock-Gelenkverbindung (4) besitzt, die in einer der Öffnungen (3) in den mittleren Wänden der Rollen montiert ist, wobei die elastische Gelenkverbindung, die an einem der Enden einer Einzelrolle angeordnet ist, mit der angrenzenden Gelenkverbindung verbunden wird, die mittels eines starren Verbindungselementes (10) an der Zusatzrolle angeordnet ist, und dass die Verbindung zwischen den genannten elastischen Gelenkverbindungen und dem starren Verbindungselement nicht nur die Drehung der genannten Standard-Einzelrollen (1) erlaubt, sondern auch die Bildung eines Winkels (α) zwischen zwei aufeinanderfolgenden Standard-Einzelrollen (1) zur kurvenförmigen Unterstützung in Form einer Girlande, ohne dass zwischen den Drehelementen eine relative Drehbewegung existiert.

2. Integrierte Verbindungsvorrichtung zwischen aufeinanderfolgenden Standard (1) - Einzelrollen zum kurvenförmigen Stützen eines flexiblen, endlosen Förderbandes nach Anspruch 1, **dadurch gekennzeichnet, dass** die elastische Einblock-Gelenkverbindung (4) aus einem Auflagekopf(5) mit konvexer Außenseite (6) und einer Endzone (8) in Form eines Kegelstumpfes besteht - wobei die Kegelstumpfforrn die Montage der genannten elastischen Einblock-Gelenkverbindung (4) in der zentralen Öffnung (3) der ebenen Wand (2) der Standard-Einzelrolle (1), die für diesen Zweck vorgesehen ist, erleichtern soll - verbunden durch eine Vertiefung (9), die entlang ihrer Symmetrieachse von einer zentralen Bohrung (11) durchbohrt ist, die das aus einer metallischen Verbindungsachse (10) gebildete, starre Verbindungselement aufnehmen soll, so dass durch geeignete Elemente wie Schrauben (12) zwei elastische Einblock-Gelenkverbindungen (4), die auf den beiden aufeinanderfolgenden Standard (1) - Einzelrollen montiert sind, eine Haltescheibe (13), die im Innern jeder der Standard (1) - Einzelrollen mit der konvexen Außenseite (6) jedes der Auflageköpfe der genannten elastischen Einblock-Gelenkverbindungen (4) in Berührung kommt, untereinander verbunden werden können, so dass der genannte Auflagekopf(5) an der Innenseite (14) der ebenen Wand (2) der genannten Standard (1) - Einzelrolle befestigt werden kann.

3. Integrierte Verbindungsvorrichtung zwischen aufeinanderfolgenden Standard (1) - Einzelrollen zum kurvenförmigen Stützen eines flexiblen, endlosen Förderbandes nach einem der vorhergehenden Ansprüche, **dadurch gekennzeichnet, dass** die zentrale Bohrung (11) der elastischen Einblock-Gelenkverbindung (4) in der Spitze (a) des Auflagekopfes (5) zu einer Kegelstumpfwinkelform (α) aufgeweitet ist, um die Bildung des Winkels (α) zwischen zwei aufeinanderfolgenden Standard (1) - Einzelrollen zu erleichtern.

4. Integrierte Verbindungsvorrichtung zwischen aufeinanderfolgenden Standard (1) - Einzelrollen zum kurvenförmigen Stützen eines flexiblen, endlosen Förderbandes nach einem der vorhergehenden Ansprüche, **dadurch gekennzeichnet, dass** die Innenseite (7) der elastischen Einblock-Gelenkverbindung (4) gegenüber der Orthogonalebene zur Symmetrieachse der genannten elastischen Einblock-Gelenkverbindung (4) eine Winkelneigung aufweist, um die Auflagen auf der Innenseite (14) der ebenen Wand (2) der Standard (1) - Einzelrolle zu verbessern.

5. Integrierte Verbindungsvorrichtung zwischen aufeinanderfolgenden Standard (1) - Einzelrollen zum kurvenförmigen Stützen eines flexiblen, endlosen Förderbandes nach einem der vorhergehenden Ansprüche, **dadurch gekennzeichnet, dass** die elastische Einblock-Gelenkverbindung (4) aus einem elastischen Polymerisationsprodukt wie einem natürlichen oder synthetischen Elastomer hergestellt ist, das eine Härte aufweist, die den Anforderungen im Betrieb gerecht wird.

6. Integrierte Verbindungsvorrichtung zwischen aufeinanderfolgenden Standard (1) - Einzelrollen zum kurvenförmigen Stützen eines flexiblen, endlosen Förderbandes nach einem der vorhergehenden Ansprüche, **dadurch gekennzeichnet, dass** die elastische Einblock-Gelenkverbindung (4) mit einem Gleitmittel aus einem Polymer überzogen ist.

7. Integrierte Verbindungsvorrichtung zwischen aufeinanderfolgenden Standard (1) - Einzelrollen zum kurvenförmigen Stützen eines flexiblen, endlosen Förderbandes nach Anspruch 6, **dadurch gekennzeichnet, dass** die elastische Einblock-Gelenkverbindung (4) nur an den Teilen ihrer Oberfläche, die mit den Innenseiten (14) oder den Außenseiten (15) der ebenen Wände (2) der Standard (1) - Einzelrollen und/oder den Vorderseiten (16), die mit den Haltescheiben (13) in Kontakt sind, mit dem Gleitmittel aus einem Polymer überzogen sind.

8. Integrierte Verbindungsvorrichtung zwischen aufeinanderfolgenden Standard (1) - Einzelrollen zum kurvenförmigen Stützen eines flexiblen, endlosen Förderbandes nach Anspruch 2, **dadurch gekennzeichnet, dass** die Vorderseite (16) der Haltescheibe (13), die mit der konvexen Außenseite (6) des Auflagekopfes (5) der genannten elastischen Einblock-Gelenkverbindung in Kontakt ist, vorzugsweise mit einem Gleitmittel aus einem Polymer der gleichen Art überzogen ist, wie das, mit dem die Oberfläche der genannten elastischen Einblock-Gelenkverbindung (4) überzogen ist.

9. Integrierte Verbindungsvorrichtung zwischen aufeinanderfolgenden Standard (1) - Einzelrollen zum kurvenförmigen Stützen eines flexiblen, endlosen Förderbandes nach einem der Ansprüche 6 bis 8, **dadurch gekennzeichnet, dass** es sich bei dem genannten Gleitmittel aus einem Polymer um eine Fluorverbindung wie beispielsweise Polytetrafluorethylen handelt.

10. Integrierte Verbindungsvorrichtung zwischen aufeinanderfolgenden Standard (1) - Einzelrollen zum kurvenförmigen Stützen eines flexiblen, endlosen Förderbandes nach einem der Ansprüche 6 bis 8, **dadurch gekennzeichnet, dass** es sich bei dem genannten Gleitmittel aus einem Polymer um ein Polyolefin mit einer hohen oder sehr hohen molaren Masse handelt wie beispielsweise Polyethylen oder Polypropylen.

## Claims

1. Integrated coupling device between two consecutive standard elementary rollers (1) of a curvilinear base support for a continuous pliable conveyor belt of a conveyor or between standard elementary rollers (1) of ends and infrastructure of the said conveyor, intended to be mounted in pairs in the central orifices (3) made in the two axially opposed plane walls (2) of each of the said standard elementary rollers (1), **characterized in that** it comprises a monobloc flexible joint (4) mounted in one of the orifices (3) made in the central walls of the rollers, the said flexible joint disposed at one of the ends of an elementary roller being connected by a rigid coupling element (10) to the adjacent joint disposed on the auxiliary roller, and **in that** the coupling between the said flexible joints and the rigid coupling element permits not only the rotation of the said standard elementary rollers (1) but also the formation of an angle (α) between two consecutive standard elementary rollers (1) to form a curvilinear base support in the shape of a garland, with no relative rotational motion between the rotation elements.

2. Integrated coupling device between consecutive standard elementary rollers (1) of a curvilinear base support for a continuous pliable conveyor belt according to Claim 1, **characterized in that** the monobloc flexible joint (4) is constituted by a supporting head (5) with convex outer face (6) and by an end zone (8) in the shape of a truncated cone, a shape intended to make the said monobloc flexible joint (4) easier to fit into the central orifice (3) of the plane wall (2) of the standard elementary roller (1) provided for this purpose, these constituent parts being connected by a mortising groove (9), which is breached, along its symmetrical axis, by a central bore (11), intended to receive the rigid coupling element formed by a metal coupling pin (10), allowing, by appropriate means such as bolts (12), the mutual connection of two monobloc flexible joints (4) mounted on two consecutive standard elementary rollers (1), a retaining disc (13) making contact, inside each of the standard elementary rollers (1), with the convex outer face (6) of each of the supporting heads of the said monobloc flexible joints (4) in order to apply the said supporting head (5) to the inner face (14) of the plane wall (2) of the said standard elementary roller (1).

3. Integrated coupling device between consecutive standard elementary rollers (1) of a curvilinear base support for a continuous pliable conveyor belt according to either of Claims 1 or 2, **characterized in that** the central bore (11) of the monobloc flexible joint (4) is flared in the shape of a truncated cone of angle (α) at the vertex (a) in the supporting head (5), in order to enhance the ease of formation of the angle (α) between two consecutive standard elementary rollers (1).

4. Integrated coupling device between consecutive standard elementary rollers (1) of a curvilinear base support for a continuous pliable conveyor belt according to one of Claims 1 to 3, **characterized in that** the inner face (7) of the monobloc flexible joint (4) has an angular inclination (i) relative to the plane perpendicular to the symmetrical axis of the said monobloc flexible joint (4), in order to improve the supports on the inner face (14) of the plane wall (2) of the standard elementary roller (1).

5. Integrated coupling device between consecutive standard elementary rollers (1) of a curvilinear base support for a continuous pliable conveyor belt according to one of Claims 1 to 4, **characterized in that** the monobloc flexible joint (4) is made of pliable polymeric material, such as a natural or synthetic polymer having a hardness appropriate to the usage requirements.

6. Integrated coupling device between standard elementary rollers (1) of a curvilinear base support for a continuous pliable conveyor belt according to one of Claims 1 to 5, **characterized in that** the monobloc flexible joint (4) is coated with a polymeric lubricant material.

7. Integrated coupling device between standard elementary rollers (1) of a curvilinear base support for a continuous pliable conveyor belt according to Claim 6, **characterized in that** the monobloc flexible joint (4) is coated, on the only parts of its surface in contact with the inner (14) or outer (15) faces of the plane walls (2) of the standard elementary elements (1) and/or with the contact faces (16) of the retaining discs (13), with the said polymeric lubricant material.

8. Integrated coupling device between standard elementary rollers (1) of a curvilinear base support for a continuous pliable conveyor belt according to Claim 2, **characterized in that** the face (16) of the retaining disc (13) in contact with the convex outer face (6) of the supporting head (5) of the said monobloc flexible joint (4) is coated with a polymeric lubricant material, preferably of the same nature as that which coats the surface of the said monobloc flexible joint (4).

9. Integrated coupling device between standard elementary rollers (1) of a curvilinear base support for a continuous pliable conveyor belt according to one of Claims 6 to 8, **characterized in that** the said polymeric lubricant material is a fluorine-containing compound such as polytetrafluorethylene.

10. Integrated coupling device between standard elementary rollers (1) of a curvilinear base support for a continuous pliable conveyor belt according to one of Claims 6 to 8, **characterized in that** the said polymeric lubricant material is a polyolefine of high or very high molecular weight, such as polyethylene or polypropylene.
